(19) Europäisches Patentamt
European Patent Office
Office européen des brevets

(11) **EP 1 996 984 B1**

(12) **FASCICULE DE BREVET EUROPEEN**

(45) Date de publication et mention
de la délivrance du brevet:
**10.03.2010 Bulletin 2010/10**

(21) Numéro de dépôt: **07713134.0**

(22) Date de dépôt: **20.03.2007**

(51) Int Cl.:
***G05B 19/4062*** *(2006.01)*

(86) Numéro de dépôt international:
**PCT/IB2007/000709**

(87) Numéro de publication internationale:
**WO 2007/107864 (27.09.2007 Gazette 2007/39)**

(54) **PROCEDE DE COMMANDE D'UN VOLET ROULANT EVITANT L'APPLICATION D'UN EFFORT TROP IMPORTANT SUR UN OBSTACLE**

VERFAHREN ZUM STEUERN EINES ROLLADENS UNTER VERMEIDUNG VON ZU VIEL BELASTUNG BEI EINEM HINDERNIS

METHOD FOR CONTROLLING A ROLLER SHUTTER AVOIDING TOO MUCH LOAD ON AN OBSTACLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.03.2006 FR 0602525**

(43) Date de publication de la demande:
**03.12.2008 Bulletin 2008/49**

(73) Titulaire: **Somfy SAS**
**74300 Cluses (FR)**

(72) Inventeurs:
• **TRANCHAND, Alain**
**F-74330 La Balme De Sillingy (FR)**
• **GIROD, Stéphane**
**F-74800 La Roche-sur-foron (FR)**

(74) Mandataire: **Bugnion Genève**
**Bugnion S.A.**
**Conseils en Propriété Industrielle**
**10, route de Florissant**
**Case Postale 375**
**1211 Genève 12-Champel (CH)**

(56) Documents cités:
WO-A-00/72436    WO-A-2004/081681
DE-A1- 4 442 171    DE-A1- 19 628 238
DE-A1- 19 700 828

**Description**

L'invention concerne un procédé de commande d'un équipement domotique selon le préambule de la revendication 1. L'invention concerne encore un actionneur pour la mise en oeuvre d'un tel procédé.

Maîtriser l'effort exercé par un écran mobile motorisé lorsqu'il rencontre un obstacle présente un double intérêt : la protection de l'obstacle et celle de l'écran mobile et/ou de son dispositif d'actionnement. D'un point de vue sécuritaire, dans le cas où l'obstacle serait une personne, il est clair que l'effort exercé par l'écran mobile doit être parfaitement maîtrisé.

Dans le domaine de l'automobile, notamment celui des lève-vitres, de nombreux documents décrivent des systèmes de protection contre les pincements qui peuvent être engendrés par le déplacement d'un élément mobile. La détection d'un pincement est alors réalisée grâce à des capteurs externes à un moteur, fonctionnant avec ou sans contact avec l'obstacle pincé ou à partir de variables internes au moteur, telles que la variation de la consommation électrique ou de la vitesse. Dans la plupart des systèmes, le procédé assurant la sécurité consiste à arrêter le moteur dès qu'une grandeur représentative de l'effort exercé par l'élément mobile atteint une valeur de consigne. L'attention est portée sur un moyen fiable et rapide pour mesurer la grandeur représentative. Dans un tel procédé, cette grandeur est surveillée continuellement avec un pas de scrutation le plus faible possible, durant tout le déplacement de l'élément mobile. La valeur de consigne est souvent une valeur fixe.

Ce procédé présente un inconvénient : les temps de réaction du système ne sont pas pris en compte ou mal pris en compte. En effet, l'exécution d'un ordre d'arrêt dépend du temps de traitement électronique de l'information provenant du capteur et également du temps de réponse mécanique du système Ces deux temps de réponse correspondent à l'inertie du système. Ainsi, lorsque la valeur de consigne est atteinte, l'ordre d'arrêt est donné mais, compte tenu des temps de réaction, lorsque l'élément mobile est effectivement arrêté, l'effort exercé par l'élément mobile risque d'être bien supérieur à celui correspondant à la valeur de consigne. Ceci conduit à choisir des valeurs de consigne correspondant à des efforts sur les obstacles bien inférieurs à l'effort maximal admissible et à arrêter, en conséquence, l'élément mobile bien avant que l'effort maximal admissible soit atteint. Dans le cas d'équipement domotiques, cet inconvénient est d'autant plus sensible que les inerties des dispositifs en mouvement sont loin d'être négligeables.

On connaît de la demande DE 44 42 171, un dispositif pour réaliser une mesure de l'évolution de l'effort de manoeuvre appliqué par un actionneur à un élément mobile en fonction du temps. Cette mesure permet de déduire l'effort appliqué par l'élément mobile sur un obstacle et de commander son arrêt.

Le but de l'invention est de fournir un procédé de commande d'un actionneur d'un équipement domotique obviant aux inconvénients mentionnés et améliorant les procédés de commande connus de l'art antérieur. En particulier, l'invention permet d'assurer une très bonne maîtrise de l'effort appliqué sur un obstacle et de maintenir un effort de manoeuvre toujours inférieur à une valeur prédéterminée.

Le procédé de commande selon l'invention est caractérisé par la partie caractérisante de la revendication 1.

Différents modes d'exécution du procédé de commande sont définis par les revendications dépendantes 2 à 8.

L'actionneur selon l'invention est muni d'un moteur. Il est caractérisé en ce qu'il comprend des moyens matériels et logiciels pour la mise en oeuvre du procédé de commande précédemment défini.

Le dessin annexé représente, à titre d'exemple, un mode de réalisation d'un actionneur selon l'invention et deux modes d'exécution d'un procédé de commande selon l'invention.

La figure 1 est un schéma d'une installation comprenant un actionneur selon l'invention.

Les figures 2 à 5 sont des graphiques illustrant les évolutions des actions mécaniques exercées par un actionneur dans différentes configurations.

Les figures 6 et 7 sont des graphiques illustrant les évolutions des actions mécaniques exercées par un actionneur dès le moment où l'élément mobile entre en contact avec un obstacle dans les cas où la rigidité de l'obstacle est fixe et dans le cas où elle évolue en fonction de la déformation de celui-ci.

Les figures 8 et 9 sont des ordinogrammes de deux modes d'exécution du procédé de commande selon l'invention.

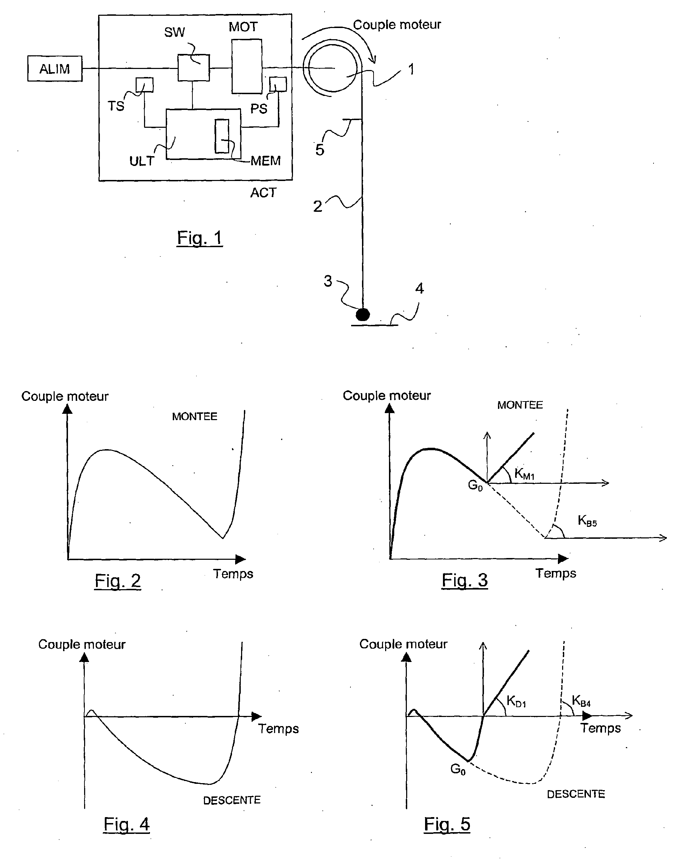

L'installation représentée à la figure 1 comprend un actionneur ACT susceptible d'entraîner un élément mobile 2 de fermeture, d'occultation ou de protection solaire équipant un bâtiment. Cet élément mobile peut être déplacé selon deux sens opposés.

L'élément mobile peut par exemple être un volet roulant comprenant un tablier constitué de lames, enroulable sur un tube d'enroulement 1 et présentant une extrémité inférieure 3 mobile entre une position extrême supérieure 5 et une position extrême inférieure 4.

L'actionneur est lié cinématiquement au tube d'enroulement et alimenté par une source d'énergie électrique ALIM. Il comprend principalement un moteur MOT, une unité logique de traitement ULT et des moyens SW de pilotage de l'alimentation électrique du moteur, ces moyens étant commandés par une sortie de l'unité logique de traitement. Les moyens de pilotage de l'alimentation électrique comprennent par exemple un ou plusieurs interrupteurs commandés tels que des relais ou des dispositifs à semi-conducteurs. L'unité logique de traitement comprend par exemple un microcontrôleur et est munie d'une mémoire MEM. L'actionneur comprend encore un capteur de position PS de l'élément mobile et un capteur TS de mesure des efforts appliqués au tube d'enroulement. Le capteur de position de l'élément mobile peut être installé au niveau de l'arbre du moteur et déterminer la position de l'élément mobile en calculant celle de l'arbre du moteur. Le capteur de mesure des efforts peut être installé au niveau des conducteurs d'alimentation du moteur et mesurer la puissance que celui-ci consomme. Alternativement, le capteur de mesure des efforts pourrait mesurer les efforts au niveau de l'arbre du moteur.

Dans le cas où l'élément mobile est un volet roulant, le couple moteur appliqué par l'actionneur évolue différemment en fonction du sens de manoeuvre. Ainsi, lors de la montée du volet, le moteur doit fournir un couple important pour soulever la charge constituée par le volet. Le couple moteur généré est directement appliqué sur le tablier du volet. Dans la phase de descente, le moteur exerce un couple résistant qui varie en fonction du déploiement de l'écran. Le moteur agit comme un frein afin d'empêcher le volet de descendre trop rapidement.

Dans le cas de la montée, la figure 2 illustre les variations du couple moteur en fonction du temps. Le couple augmente d'abord fortement. Cette augmentation correspond au dépilement des lames du tablier 4. L'actionneur doit progressivement produire un couple suffisant pour soulever tout le poids du tablier. Puis, le tablier 2 s'enroule autour du tube 1 ce qui entraîne une diminution progressive du couple. Enfin, le tablier 2 va buter en position extrême supérieure 5. Le couple augmente alors brutalement jusqu'à ce que l'actionneur soit arrêté.

Si un obstacle est atteint lors de l'enroulement du tablier, le couple moteur a une caractéristique proche de celle décrite ci-après en référence à la figure 3. Si le tablier rencontre un obstacle, le couple moteur croît rapidement selon une variation sensiblement linéaire dont la pente est proportionnelle à la rigidité $K_{m1}$. Par la suite, on appellera rigidité ou raideur K, la dérivée d'une grandeur représentative de l'effort de manoeuvre du volet par rapport au temps. Par dérivée, il faut entendre la variation de cette grandeur par rapport à une variation de temps correspondante, sans pour autant comprendre une dérivée au sens stricte du terme. Cette rigidité ou raideur associée à un obstacle correspond à la rigidité proprement dite de l'obstacle, mais également celle de l'ensemble de la chaîne cinématique entre l'actionneur et le volet, y compris les lames du tablier qui présentent une rigidité différente en extension et en compression. Ici, la grandeur représentative est le couple moteur. Selon la figure 3, l'obstacle est détecté à un couple Go, ce couple augmentant selon une pente $K_{M1}$ jusqu'à ce que l'actionneur soit arrêté. En fin de course, lorsque le tablier 2 atteint la position extrême supérieure 5, le même phénomène se produit. On note $K_{B5}$ la raideur associée à cette butée haute.

Dans le cas de la descente, la figure 4 illustre les variations du couple moteur en fonction du temps. Le couple au démarrage est proche de zéro. Dans un premier temps, l'actionneur s'oppose aux frottements et à l'inertie de l'installation et commence à déployer le volet. Puis, une fois qu'une certaine quantité de lames du volet est déployée, le tablier exerce un couple entraînant le moteur. L'actionneur freine alors le tablier. En effet, au fur et à mesure que le tablier se déploie, la masse suspendue du volet augmente. Pour réguler la vitesse de fermeture du volet, le moteur fonctionne alors comme un frein. Lorsque le tablier 2 atteint la position extrême inférieure 4, les lames s'empilent. Une fois toutes les lames empilées, la charge du tablier est nulle. L'actionneur ne freine plus le volet. Le couple appliqué par l'actionneur devient un couple moteur qui augmente jusqu'à ce que l'alimentation de l'actionneur soit coupée.

Si un obstacle est atteint lors du déroulement du tablier, le couple moteur à une caractéristique proche de celle décrite ci-après en référence à la figure 5. Dès que le tablier rencontre un obstacle, les lames du tablier s'empilent et le couple résistant de l'actionneur devient rapidement moteur. Après la détection de l'obstacle à un couple Go, l'évolution de celui-ci est d'abord indépendant de la rigidité $K_{D1}$ de l'obstacle (empilement des lames) puis devient proportionnelle à cette rigidité. De même, lorsque le tablier 2 atteint la position extrême inférieure 4, l'évolution du couple est déterminée par la rigidité $K_{B4}$ de la butée inférieure.

A partir des figures 3 et 5, on constate que le couple mesuré après détection de l'obstacle varie en fonction de la raideur de la butée rencontrée. Le procédé proposé prend en compte cette raideur pour déterminer une valeur de consigne déclenchant l'exécution d'un ordre d'arrêt de l'actionneur, voire un léger mouvement inverse de celui-ci et évitant qu'effort supérieur à un effort maximal admissible soit appliqué sur le volet.

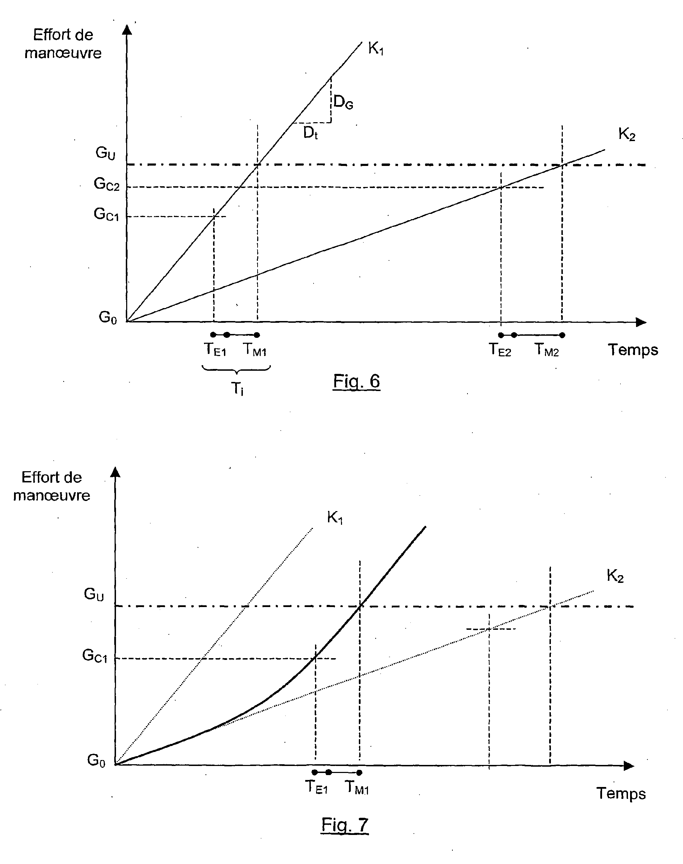

Les figures 6 et 7 détaillent le principe du procédé de commande selon l'invention pour deux types d'obstacle.

Dans un premier cas, l'obstacle rencontré a une raideur $K_1$. L'obstacle est tout d'abord détecté par une variation significative d'une grandeur représentative de l'effort de manoeuvre. Cette grandeur peut être le couple moteur comme vu précédemment. Cette grandeur est mesurée à intervalle régulier grâce au capteur de mesure des efforts appliqués. A partir d'une rupture de valeur de pente de la grandeur mesurée, correspondant à la valeur Go, on détecte l'arrivée du volet en contact avec l'obstacle. On continue alors à mesurer l'évolution de la grandeur dans le temps. On en déduit alors une raideur $K_1$ qui est l'image de la rigidité du système constitué par la chaîne cinématique d'entraînement du volet roulant et de l'obstacle rencontré. L'utilisateur ou l'installateur a préalablement défini une valeur limite Gu de la grandeur mesurée correspondant à l'effort maximal admissible sur le volet roulant. Grâce à la raideur $K_1$ et à la valeur limite Gu de la grandeur mesurée, il est alors possible de calculer une valeur de consigne $G_{C1}$ de la grandeur mesurée, cette valeur de consigne déclenchant l'exécution d'un ordre d'arrêt de manoeuvre du volet. La valeur de consigne $G_{C1}$ prend en compte le temps de réponse électronique $T_{E1}$ et le temps de réponse mécanique de l'installation $T_{M1}$, étant lié à l'inertie de l'installation. Le temps de réponse mécanique correspond essentiellement à l'inertie du moteur. Ce temps $T_{M1}$ est plus important que le temps de réponse électronique $T_{E1}$. On note Ti, la somme de ces deux temps de réponse. Cette valeur est variable en fonction de la position du volet et de la rigidité de l'obstacle.

La relation donnant la valeur de consigne $G_{C1}$ est du type :

$$G_{C1} = G_U - K_1 \times Ti$$

Le temps Ti peut être soit fixé par l'utilisateur, l'installateur, le fabricant ou toute autre personne, soit défini lors d'une phase d'apprentissage. Cela peut être le cas, par exemple, lors de l'initialisation de l'actionneur. Pour ce faire, l'actionneur exécute un ordre de descente du volet. Au moment où la butée est détectée, on mesure le temps que met l'écran pour s'arrêter effectivement. Le temps de réaction Ti peut alors être estimé à partir de ce temps mesuré. Cette valeur peut également être extrapolée aux autres temps de réponses Ti relatifs à différentes raideurs d'obstacles.

La formule de calcul de la valeur de consigne $G_{C1}$ repose ainsi sur une extrapolation dans le temps de l'effort de manoeuvre. Dans le cas décrit précédemment, l'extrapolation repose sur une loi polynomiale et, plus exactement, sur une loi affine dans laquelle on utilise comme paramètre la dérivée de l'effort de manoeuvre par rapport au temps, ce paramètre étant multiplié par la variable temporelle.

Dans un deuxième cas, illustré par la figure 7, il se peut que la rigidité de l'obstacle varie avec sa déformation. Dans ce cas, la raideur de l'obstacle est calculée plusieurs fois après que l'obstacle a été détecté et la valeur de consigne est modifiée suite à chaque calcul de raideur pour que celle-ci corresponde à la dernière raideur calculée. Ainsi, dans un premier temps, la raideur calculée vaut $K_2$, la valeur de consigne calculée est alors $G_{C2}$. Puis, la raideur de l'obstacle augmente pour atteindre $K_1$. La nouvelle valeur de consigne calculée est alors $G_{C1}$.

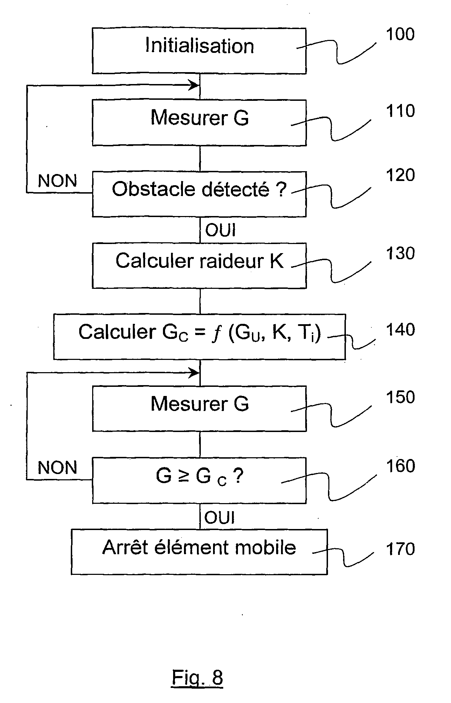

Un mode d'exécution détaillé du procédé de commande selon l'invention est décrit ci-après en référence à l'ordinogramme de la figure 8.

Dans une première étape d'initialisation 100, une valeur limite Gu de la grandeur mesurée correspondant à l'effort maximal admissible sur le volet roulant est fixée. Elle peut être fixée par l'utilisateur, l'installateur, le fabricant ou toute autre personne. Elle peut être déterminée en fonction de la position de l'écran. On peut, par exemple, souhaiter que l'effort maximal admissible soit plus important au début de la descente qu'en fin de course, lorsque le tablier atteint la position extrême inférieure.

D'autre part, cette valeur peut être modifiée dans le temps moyennant un réglage spécifique.

Dans une étape 110, on mesure, grâce au capteur TS la grandeur représentative de l'effort de manoeuvre de façon continue, tout au long du déplacement du volet. La fréquence de mesure est définie en fonction de la précision souhaitée. En effet, plus les mesures sont espacées, moins la maîtrise de l'effort appliquée sur l'obstacle par le volet lors de son arrêt est précis.

Dans une étape 120, on analyse si l'écran a rencontré une butée. Pour ce faire, on compare la dernière grandeur mesurée par rapport aux mesures précédentes. Si l'évolution est marquée par une rupture de pente significative, cela signifie qu'un obstacle est rencontré : on passe alors à une étape 130. Dans le cas contraire, on boucle sur l'étape 110.

Dans l'étape 130, on calcule une raideur K en analysant l'évolution de la grandeur mesurée. Pour un intervalle de temps Dt, cette raideur K correspond à la différence entre les valeurs de la grandeur mesurées aux extrémités de l'intervalle de temps divisée par l'amplitude de l'intervalle de temps Dt.

Dans une étape 140, on calcule une valeur de consigne Gc de la grandeur mesurée à partir de la raideur K, de la valeur limite Gu et de l'inertie de l'installation Ti. Cette valeur de consigne déclenche, lorsque la grandeur mesurée l'atteint, un ordre d'arrêt de l'alimentation du moteur. Elle est déterminée de manière à ce qu'une fois l'ordre d'arrêt exécuté, le volet s'arrête effectivement avant que la valeur limite Gu ne soit atteinte et donc que l'effort limite admissible sur le volet ne soit atteint. Le calcul de cette valeur de consigne Gc est analogue à celui détaillé précédemment.

Dans une étape 150, on mesure de nouveau la valeur G de la grandeur mesurée, comme à l'étape 110.

Dans une étape 160, on compare la valeur G de la grandeur mesurée à l'étape 150 à la valeur de consigne Gc. Si la valeur G est inférieure à la valeur de consigne, on boucle sur l'étape 150. Dans le cas contraire, on passe à l'étape 170.

Dans l'étape 170, on coupe l'alimentation électrique du moteur. Ceci a pour conséquence d'arrêter le volet de manière à ce que l'effort de manoeuvre appliqué sur l'obstacle est inférieur ou égal à l'effort maximum admissible.

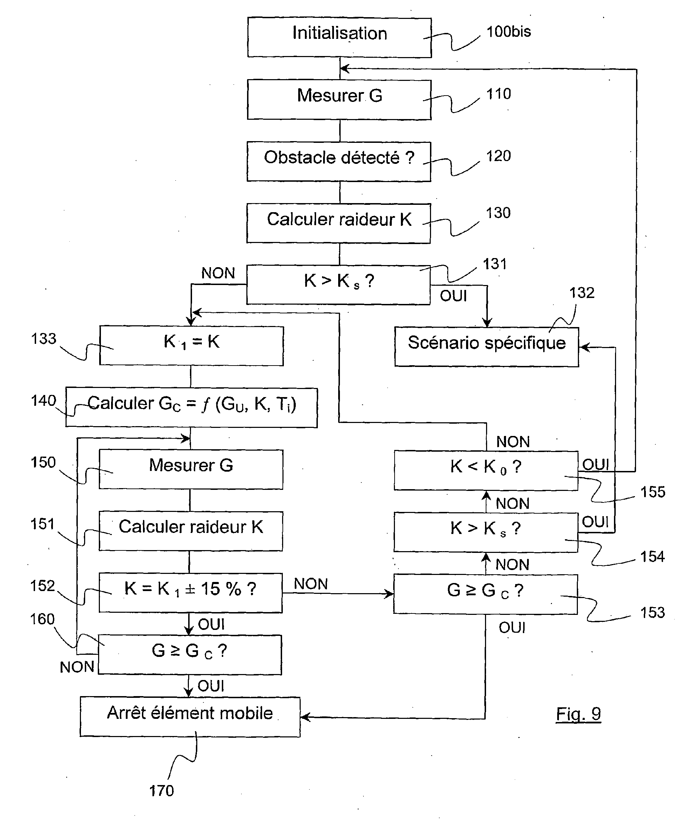

Un deuxième mode de réalisation, enrichi de nouvelles fonctionnalités, est décrit dans l'ordinogramme de la figure 9.

Les étapes 110, 120, 130, 140, 150, 160 et 170 sont identiques à celles décrites précédemment.

L'étape d'initialisation 100bis comprend deux opérations supplémentaires à l'opération consistant à fixer la valeur limite Gu. La première est la définition d'une valeur seuil Ks. Elle correspond à une raideur d'obstacle important au-delà de laquelle, on souhaite exécuter un scénario spécifique. Elle peut être différente en fonction de la position du volet. La deuxième opération est la définition d'une deuxième valeur seuil Ko. Elle correspond à une valeur de raideur en dessous de laquelle, on considère qu'un obstacle n'est pas contraignant pour l'installation.

Suite à l'étape 130, on compare, dans une étape 131, la raideur K calculée avec la raideur seuil Ks préalablement définie. Si la raideur K est supérieure à la raideur seuil Ks, alors on passe à une étape 132. Sinon, on passe à une étape 133.

Dans l'étape 132, on exécute un scénario spécifique en réponse au dépassement de la raideur seuil Ks. Ce scénario peut être un scénario de sécurité dans lequel, on coupe immédiatement l'alimentation du moteur et dans lequel on commande même éventuellement un léger mouvement inverse du moteur.

Dans l'étape 133, la valeur instantanée $K_1$ de la raideur K calculée est stockée en mémoire.

Les étapes suivantes sont les étapes 140 et 150, puis vient une étape 151 où on calcule de nouveau la raideur K, comme à l'étape 130.

Dans une étape 152, on compare la nouvelle valeur de la raideur avec la raideur K, mémorisée à l'étape 133. Si cette valeur est stable, c'est à dire, comprise dans un intervalle correspondant à K, plus ou moins 15%, alors on passe à l'étape 160. Dans le cas contraire, on enchaîne avec une étape 153.

Dans l'étape 153, on compare la valeur G de la grandeur de la grandeur mesurée à l'étape 150 à la valeur de consigne Gc. Si la valeur G est supérieure ou égale à la valeur de consigne, on passe à l'étape 170 sinon, on passe à une étape 154.

Dans l'étape 154, on compare la nouvelle valeur de raideur K avec la raideur seuil Ks définie précédemment. Si la valeur de raideur K dépasse le seuil, alors le scénario spécifique de l'étape 132 est exécuté. Alternativement, on passe à une étape 155.

Dans l'étape 155, on compare la nouvelle valeur de raideur K avec l'autre valeur seuil Ko précédemment définie. A ce stade, l'objectif est de vérifier si l'obstacle est toujours présent. Par exemple, il arrive que l'obstacle détecté résulte du frottement des lames du tablier dans les coulisses. Après le passage du point dur, il n'y a plus de raideur et donc, plus d'obstacle détecté. Il faut alors redémarrer la surveillance. Ainsi, si la valeur de raideur est inférieure ou égale à la valeur Ko, on passe à l'étape 110. Si la valeur de la raideur K est supérieure à la valeur de la raideur Ko alors, l'obstacle a une raideur variable pour laquelle il faut recalculer la valeur de consigne : on passe donc à l'étape 133.

Il est à noter que certaines alternatives au mode d'exécution décrit sont plus pertinentes avec un capteur de position de l'écran afin de déterminer des paramètres pertinents à un fonctionnement optimisé du procédé de commande. Ces paramètres sont par exemple la valeur limite Gu de la grandeur mesurée ou les raideurs seuil Ks ou Ko. On peut en effet souhaiter qu'en fin de fermeture du volet, au moment où il y a le plus de risque de rencontrer un obstacle, l'effort maximal admissible sur le volet soit faible et que, a contrario, sur le reste de la course, l'effort maximal admissible sur le volet soit plus élevé, surtout s'il y a des risques de frottements des lames dans les coulisses qui risquent de provoquer des arrêts intempestifs.

Le procédé de commande selon l'invention peut également prévoir une étape de relaxation. Une telle étape peut notamment être mise en oeuvre lorsqu'un effort supérieur à l'effort maximal admissible est détecté après l'arrêt effectif du volet. Cette étape comprend un léger mouvement inverse du moteur.

## Revendications

1. Procédé de commande d'un équipement domotique comprenant un actionneur électrique (ACT), un élément mobile (2) de fermeture, d'occultation ou de protection solaire, équipant un bâtiment et manoeuvré par l'actionneur, et un moyen (TS) de mesure de l'effort de manoeuvre exercé sur l'élément mobile, le procédé comprenant une étape dans laquelle un ordre d'arrêt automatique est exécuté dès qu'une valeur de consigne (Gc) de l'effort de manoeuvre est atteinte, **caractérisé en ce que** la valeur de consigne de l'effort de manoeuvre est calculée pendant le mouvement de l'élément mobile en extrapolant dans le temps l'effort de manoeuvre de manière à éviter qu'une valeur seuil prédéterminée (Gu) de l'effort de manoeuvre ne soit franchie lors de l'arrêt automatique.

2. Procédé de commande selon la revendication 1, **caractérisé en ce que** l'extrapolation dans le temps de l'effort de manoeuvre est faite selon une loi polynomiale.

3. Procédé de commande selon la revendication 2, **caractérisé en ce que** l'extrapolation dans le temps de l'effort de manoeuvre est faite selon une loi affine.

4. Procédé de commande selon l'une des revendications précédentes, **caractérisé en ce que** l'extrapolation dans le temps de l'effort de manoeuvre est faite selon une loi mathématique utilisant comme paramètre la dérivée de l'effort de manoeuvre par rapport au temps.

5. Procédé de commande selon l'une des revendications précédentes, **caractérisé en ce que** le calcul de la valeur de consigne de l'effort de manoeuvre est effectué à intervalle de temps régulier.

6. Procédé de commande selon l'une des revendications précédentes, **caractérisé en ce que** la valeur seuil prédéterminée de l'effort de manoeuvre dépend de la position de l'élément mobile.

7. Procédé de commande selon l'une des revendications précédentes, **caractérisé en ce que** la valeur de consigne de l'effort de manoeuvre est déduite de la valeur seuil prédéterminée et des temps de réponse électronique et mécanique de l'équipement domotique à l'ordre d'arrêt automatique.

8. Procédé de commande selon l'une des revendications précédentes, **caractérisé en ce que** le procédé comprend une étape supplémentaire de relaxation de l'élément mobile consistant à ordonner un mouvement inverse à l'élément mobile jusqu'à ce que l'effort de manoeuvre soit inférieur à la valeur seuil prédéterminée.

9. Actionneur (ACT) muni d'un moteur (MOT), **caractérisé en ce qu'**il comprend des moyens matériels (ULT, MEM, TS, PS, SW) et logiciels pour la mise en oeuvre du procédé de commande selon l'une des revendications 1 à 8.

**Claims**

1. Method for controlling a home automation device comprising an electric actuator (ACT), a mobile element (2) for closing, privacy or solar protection equipping a building and moved by the actuator, and a means (TS) for measuring the moving load exerted on the mobile element, the method including a step whereby an automatic stop command is executed when a setpoint value (Gc) of moving load is reached, **characterized in that** the moving load setpoint value is calculated during the displacement of the mobile element by extrapolating in time the moving load so as to prevent a predetermined moving load (Gu) threshold from being exceeded when the automatic stop is performed.

2. Controlling method according to claim 1, **characterized in that** the extrapolation in time of the moving load is made according to a polynomial law.

3. Controlling method according to claim 2, **characterized in that** the extrapolation in time of the moving load is made according to an affine law.

4. Controlling method according to any of the preceding claims, **characterized in that** the extrapolation in time of the moving load is made according to a mathematical law using as parameter the derivative of the moving load with respect to the time.

5. Controlling method according to any of the preceding claims, **characterized in that** the calculation of the setpoint value of the moving load is made at regular time intervals.

6. Controlling method according to any of the preceding claims, **characterized in that** the predetermined threshold value of the moving load depends on the position of the mobile element.

7. Controlling method according to any of the preceding claims, **characterized in that** the sepoint value of the moving load is deduced from the predetermined threshold value and from the electronic and mechanic response times of the home automation device at the automatic stop command.

8. Controlling method according to any of the preceding claims, **characterized in that** the method comprises an additional step of relaxation of the mobile element consisting of ordering a reverse movement to the mobile element until the moving load is below the predetermined threshold value.

9. Actuator (ACT) provided with a motor (MOT), **characterized in that** it comprises material means (ULT, MEM, TES, PS, SW) and software to implement the controlling method according to one of claims 1 to 8.

**Patentansprüche**

1. Verfahren zur Steuerung einer domotischen Ausrüstung mit einem elektrischen Betätigungsgerät (ACT), mit einem beweglichen Schliess-, Verdunkelungs- oder Sonnenschutzelement, das in einem Gebäude installiert ist und von dem Betätigungsgerät betätigt wird, sowie mit einem Mittel (TS) zum Messen der auf das bewegliche Element ausgeübten Betätigungskraft, wobei das Verfahren einen Schritt umfasst, bei dem ein automatischer Stoppbefehl ausgeführt wird, sobald ein Sollwert (Gc) der Betätigungskraft erreicht ist, **dadurch gekennzeichnet, dass** der Sollwert der Betätigungskraft während der Bewegung des beweglichen Elements berechnet wird, indem der zeitliche Verlauf der Betätigungskraft extrapoliert wird, um zu vermeiden, dass ein vorbestimmter Schwellwert (Gu) der Betätigungskraft während des automatschen Stopps überschritten wird.

2. Verfahren nach Anspruch 1, **dadurch gekennzeichnet, dass** die Extrapolation des zeitlichen Verlaufs der Betätigungskraft gemäss einem polynomischen Gesetz erfolgt.

3. Verfahren nach Anspruch 2, **dadurch gekennzeichnet, dass** die Extrapolation des zeitlichen Verlaufs der Betätigungskraft gemäss einem affinen Gesetz erfolgt.

4. Verfahren nach einem der vorangehenden Ansprüche, **dadurch gekennzeichnet, dass** die Extrapolation des zeitlichen Verlaufs der Betätigungskraft gemäss einem mathematischen Gesetz erfolgt, das als Parameter die Ableitung der Betätigungskraft in bezug auf die Zeit verwendet.

5. Verfahren nach einem der vorangehenden Ansprüche, **dadurch gekennzeichnet, dass** die Berechnung des Sollwerts der Betätigungskraft in regelmässigen Zeitintervallen erfolgt.

6. Verfahren nach einem der vorangehenden Ansprüche, **dadurch gekennzeichnet, dass** der vorbestimmte Schwellenwert der Betätigungskraft von der Position des beweglichen Elements abhängt.

7. Verfahren nach einem der vorangehenden Ansprüche, **dadurch gekennzeichnet, dass** der Sollwert der Betätigungskraft vom vorbestimmten Schwellenwert und den elektronischen und mechanischen Ansprechzeiten der domotischen Ausrüstung auf den automatischen Stopp abgeleitet wird.

8. Verfahren nach einem der vorangehenden Ansprüche, **dadurch gekennzeichnet, dass** das Verfahren einen zusätzlichen Schritt der Relaxation des beweglichen Elements umfasst, der darin besteht, dass dem beweglichen Element ein Befehl gegeben wird, eine umgekehrte Bewegung auszuführen, bis die Betätigungskraft kleiner als der vorbestimmte Schwellenwert wird.

9. Betätigungsgerät (ACT), das mit einem Motor (MOT) ausgerüstet ist, **dadurch gekennzeichnet, dass** es zur Durchführung des Steuerungsverfahrens nach einem der Ansprüche 1 bis 8 Hardware (ULT, MEM, TS, PS, SW) und Software aufweist.

Fig. 1

Fig. 2

Fig. 3

Fig. 4

Fig. 5

Fig. 6

Fig. 7

Initialisation — 100

Mesurer G — 110

NON — Obstacle détecté ? — 120

OUI

Calculer raideur K — 130

Calculer $G_C = f\,(G_U, K, T_i)$ — 140

Mesurer G — 150

NON — $G \geq G_c$ ? — 160

OUI

Arrêt élément mobile — 170

Fig. 8

Initialisation — 100bis

Mesurer G — 110

Obstacle détecté ? — 120

Calculer raideur K — 130

131

NON   K > K $_s$ ?   OUI

132

133   K $_1$ = K   Scénario spécifique

140   Calculer G$_C$ = $f$ (G$_U$, K, T$_i$)

NON

150   Mesurer G   K < K $_0$ ?   OUI

155

NON

151   Calculer raideur K   K > K $_s$ ?   OUI

154

NON

152   K = K $_1$ ± 15 % ?   NON   G ≥ G $_c$ ?

153

160   OUI

G ≥ G $_c$ ?   OUI

NON

OUI

170   Arrêt élément mobile

Fig. 9

**EP 1 996 984 B1**

## RÉFÉRENCES CITÉES DANS LA DESCRIPTION

**Documents brevets cités dans la description**

- DE 4442171